# EUROPÄISCHE PATENTSCHRIFT

(11) **EP 0 937 314 B1**
(45) Veröffentlichungstag und Bekanntmachung des Hinweises auf die Patenterteilung: **04.07.2001**
(21) Anmeldenummer: 97912052.4
(22) Anmeldetag: 15.10.1997
(51) Int. Cl.: H01Q 15/02, H01Q 15/08, H01Q 19/06, H01Q 25/00, H01Q 1/32

(54) **LINSENANORDNUNG ZUR BÜNDELUNG VON RADARWELLEN**
LENS ARRANGEMENT SUITED FOR FOCUSING RADAR WAVES
DISPOSITION DE LENTILLES PROPRE A FOCALISER LES ONDES RADAR

(30) Priorität: 07.11.1996 DE 19645816
(43) Veröffentlichungstag der Anmeldung: 25.08.1999
(73) Patentinhaber: ROBERT BOSCH GMBH, 70442 Stuttgart (DE)
(72) Erfinder: SCHMIDT, Ewald, D-71634 Ludwigsburg (DE); PFIZENMAIER, Heinz, D-71229 Leonberg (DE); VOIGTLÄNDER, Klaus, D-73117 Wangen (DE); WAGNER, Klaus-Peter, D-70193 Stuttgart (DE); LUCAS, Bernhard, D-74395 Mundelsheim (DE); BEEZ, Thomas, D-74189 Weinsberg (DE); SCHNEEMANN, Jörg, D-71554 Weissach (DE)
(86) Internationale Anmeldenummer: DE9702357
(87) Internationale Veröffentlichungsnummer: WO9820579

(56) Entgegenhaltungen:
- EP-A- 0 561 353
- EP-A- 0 634 667
- US-A- 5 125 735

## Beschreibung

Die Erfindung betrifft eine Linsenanordnung zur Bündelung von Radarwellen für Abstandssensoren, insbesondere für Kraftfahrzeuge.

Bekannt sind rotationssymmetrisch ausgebildete Linsen für Abstandssensoren, wobei Abschnitte der runden Projektionsfläche weggelassen werden, um die Linse an eine vorgegebene Gehäusegeometrie anzupassen. Die Querschnittsformen der Linsen sind dabei aplanar, plan-konvex, bi-konvex, Meniskus jeweils mit oder ohne Fresnellstrukturierung sowie plan-plan bei phasenverzögerten Linsen mit Fresnellringen. Diesen Linsen ist gemein, daß bei einem vorgegebenen Abstand zwischen als Sende- und Empfangsantennen verwendeten sogenannten Patches mit kleiner werdendem horizontalen Linsendurchmesser der horizontale Keulenwinkel zunimmt, der Antennengewinn und damit die Reichweite des Abstandssensors jedoch abnimmt. Eine bestimmte Keulenbreite ist jedoch zur Erfassung von Objekten, die schräg vor dem Fahrzeug liegen, erforderlich.

Häufig werden bei diesen bekannten Abstandssensoren drei horizontal versetzte Keulen verwendet, wozu drei Patches vorgesehen sind. Das mittlere der drei Patches liegt auf der Längsachse im Linsenbrennpunkt, die anderen Patches horizontal links bzw. rechts davon. Damit entstehen drei Antennenkeulen, eine normale und zwei diametral "schielende" Keulen, die jeweils einen gewissen Winkelbereich überstreichen und zur Abstands- und Winkeldetektion eines Zieles herangezogen werden können. Dabei ist zu vermeiden, daß zwischen den Keulen der einzelnen Patches Zonen mit zu geringer Reichweite liegen, so daß in diesen Zonen liegende Ziele nicht oder zu spät erfaßt werden.

Wie bereits erwähnt, kann jedoch zu Gunsten einer Vergrößerung der Keulenwinkel die Breite der Linse nicht beliebig klein gewählt werden, da ansonsten die Reichweite insgesamt zu klein wird. Im Falle eines Einbaus in ein Fahrzeug ist ferner eine Linse in Form eines liegenden Rechtecks erwünscht.

Aus der EP 0 634 667 A2 ist ein Monopuls-Kleinradar bekannt, bei dem eine plankovexe Linse in einem Gehäuse integriert ist. Die Linse ist derart angeordnet, daß sie sich im Strahlungsfeld dielektrischer Strahler befindet, die jeweils am Ausgang eines Hohlleiters fixiert sind. Das System kann beispielsweise als FM-CW System im Kfz-Bereich eingesetzt werden.

Aus der US 5,125,735 ist eine automatische Mehr-Punkt-Entfernungsmeßvorrichtung bekannt, die Lichtstrahlen in verschiedene Richtungen emittiert. Die von verschiedenen Objekten reflektierten Lichtstrahlen werden von einer optischen Linse auf einen Lichtsensor fokussiert. Die optische Linse weist hierbei eine Mehrzahl optischer Achsen auf, die nach vorgegebenen geometrischen Bedingungen ausgelegt sind.

Aufgabe der vorliegenden Erfindung ist es daher, eine Linsenanordnung anzugeben, mit welcher ausreichend große Keulenwinkel möglich sind, ohne daß die Fläche und insbesondere die Ausdehnung in Richtung der gewünschten größeren Keulenwinkel ein vorgegebenes Maß nicht unterschreiten.

Diese Aufgabe wird erfindungsgemäß dadurch gelöst, daß bei einer Linsenanordnung zur Bündelung von Radarwellen für Abstandssensoren, insbesondere für Kraftfahrzeuge, mehrere Teillinsen einstückig nebeneinander angeordnet sind. Vorzugsweise ist dabei vorgesehen, daß die Brennpunkte der Teillinsen in einer zur Linsenebene parallelen Ebene liegen.

Durch die erfindungsgemäße Anordnung wird bei jedem Strahl eine für die Winkelauswertung notwendige Keulenverbreiterung erzielt. Gegenüber einer Linse mit einer gleich großen Fläche wird die Reichweite dabei nur geringfügig reduziert.

Die erfindungsgemäße Linsenanordnung kann für Anwendungen, bei denen eine vertikale Winkeldetektion erfolgen soll, mit den gleichen Vorteilen vertikal ausgerichtet werden.

Ein vergrößerter Keulenwinkel kann insbesondere dadurch erreicht werden, daß die Ausdehnung mindestens einer mittleren Linse in Längsrichtung der gesamten Linsenanordnung kleiner als in Querrichtung ist.

Eine vorteilhafte Ausgestaltung der Erfindung besteht darin, daß drei Teillinsen vorgesehen sind. Die erfindungsgemäße Linsenanordnung kann jedoch auch mit zwei oder mit mehr als drei Linsen verwirklicht werden.

Eine andere vorteilhafte Ausgestaltung der Erfindung besteht darin, daß die Teillinsen die Form von Hyperboloiden aufweisen. Es sind jedoch auch andere Linsenformen, beispielsweise die eingangs erwähnten Linsenformen, möglich.

Eine vorteilhafte Weiterbildung besteht darin, daß die Achsen von seitlichen Teillinsen gegenüber der Achse mindestens einer mittleren Teillinse geneigt sind. Hierdurch wird eine günstigere Bündelung der Radarwellen durch die seitlichen Teillinsen erzielt.

Mit einer anderen Weiterbildung der Erfindung wird eine relativ einfache, jedoch wirksame Linsenanordnung dadurch erreicht, daß die mindestens eine mittlere Teillinse nur in Querrichtung der gesamten Linsenanordnung gekrümmt ist. Dabei ist vorzugsweise vorgesehen, daß die mindestens eine mittlere Teillinse eine gerade Scheitellinie aufweist, welche Scheitelpunkte der beiden seitlichen Teillinsen miteinander verbindet.

Ausführungsbeispiele der Erfindung sind in der Zeichnung anhand mehrerer Figuren dargestellt und in der nachfolgenden Beschreibung näher erläutert. Es zeigt:
- Fig. 1: eine perspektivische Darstellung eines längs geschnittenen Ausführungsbeispiels,
- Fig. 2: das Ausführungsbeispiel nach Fig. 1 in Schnittdarstellung zusammen mit schematisch angedeuteten weiteren Teilen eines Abstandssensors,
- Fig. 3: einen Längsschnitt durch ein zweites Ausführungsbeispiel,
- Fig. 4: ein Antennendiagramm einer erfindungsgemäßen Linsenanordnung für ein mittleres Patch und
- Fig. 5: ein Antennendiagramm für eine erfindungsgemäße Linsenanordnung für ein rechtes Patch.

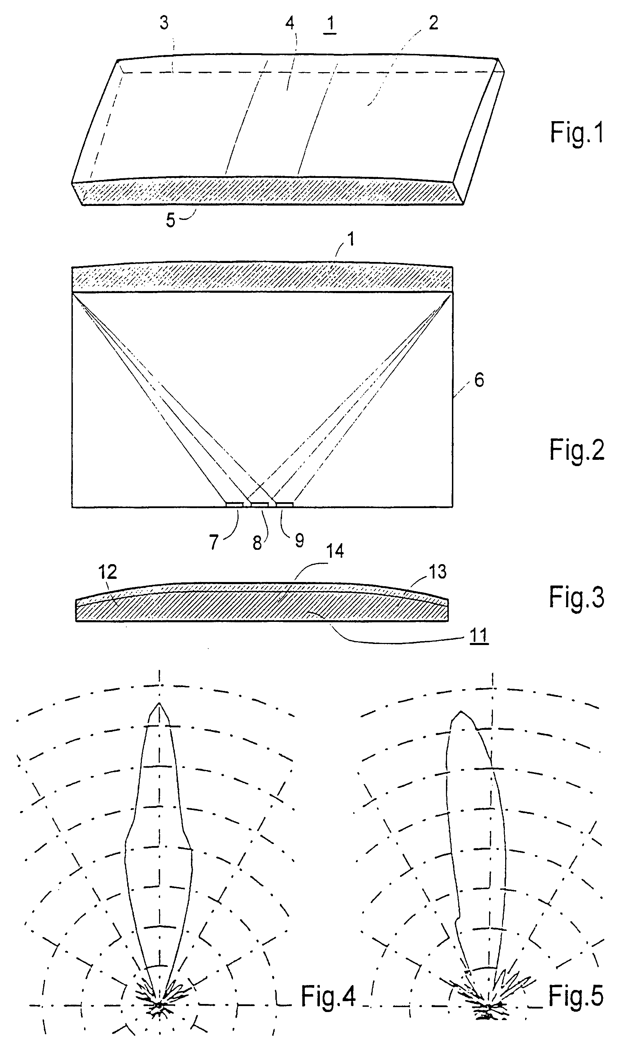

Die Linsenanordnung gemäß Fig. 1 besteht aus zwei seitlichen Teillinsen 2, 3 und einer mittleren Teillinse 4 und ist in der Ebene 5 geschnitten dargestellt. Die Linsenanordnung kann kostengünstig aus thermoplastischem Kunststoff, wie PC, PE, PS, PP oder PTFE, gespritzt oder aus Keramik, vorzugsweise Aluminiumoxid oder Titandioxid, gepreßt und gesintert werden.

Fig. 2 zeigt einen Längsschnitt durch die Linsenanordnung 1, die mit einem Gehäuse 6 eines Abstandssensors in Verbindung steht, in dem drei Sende/Empfangs-Patches 7, 8, 9 angeordnet sind. Die Randstrahlen der von den Patches ausgehenden bzw. von den Patches empfangenen Strahlen sind angedeutet.

Fig. 3 zeigt einen Längsschnitt durch ein zweites Ausführungsbeispiel, wobei die Wölbung der Linsen der Anschaulichkeit halber überhöht dargestellt ist. Diese Linsenanordnung 11 zeichnet sich dadurch aus, daß die mittlere Teillinse 14 nur in Querrichtung gewölbt ist. Die seitlichen Teillinsen 12, 13 sind wie bei dem Ausführungsbeispiel nach Fig. 1 nach beiden Richtungen gewölbt.

Fig. 4 zeigt ein Antennendiagramm eines mittleren Patches, wobei gegenüber einer gleich großen einteiligen Linse der Keulenwinkel vergrößert ist. Auch der Keulenwinkel bei einem seitlichen Patch (in Fig. 5 des rechten Patches) wird vergrößert, so daß Einbrüche der Reichweite in den Übergangsbereichen zwischen den Keulen vermieden werden.

## Patentansprüche

1. Linsenanordnung zur Bündelung von Radarwellen für Abstandssensoren, insbesondere für Kraftfahrzeuge, dadurch gekennzeichnet, daß mehrere Teillinsen (2, 3, 4; 12, 13, 14) einstückig nebeneinander angeordnet sind.

2. Linsenanordnung nach Anspruch 1, dadurch gekennzeichnet, daß die Brennpunkte der Teillinsen (2, 3, 4; 12, 13, 14) in einer zur Linsenebene parallelen Ebene liegen.

3. Linsenanordnung nach Anspruch 1 oder 2, dadurch gekennzeichnet, daß die Ausdehnung mindestens einer mittleren Linse (4; 14) in Längsrichtung der gesamten Linsenanordnung (1; 11) kleiner als in Querrichtung ist.

4. Linsenanordnung nach einem der vorhergehenden Ansprüche, dadurch gekennzeichnet, daß drei Teillinsen (2, 3, 4; 12, 13, 14) vorgesehen sind.

5. Linsenanordnung nach einem der vorhergehenden Ansprüche, dadurch gekennzeichnet, daß die Teillinsen (2, 3, 4) die Form von Hyperboloiden aufweisen.

6. Linsenanordnung nach einem der vorhergehenden Ansprüche, dadurch gekennzeichnet, daß die Achsen von seitlichen Teillinsen (2, 3; 12, 13) gegenüber der Achse mindestens einer mittleren Teillinse (4; 14) geneigt sind.

7. Linsenanordnung nach einem der vorhergehenden Ansprüche, dadurch gekennzeichnet, daß die mindestens eine mittlere Teillinse (14) nur in Querrichtung der gesamten Linsenanordnung (11) gekrümmt ist.

8. Linsenanordnung nach Anspruch 7, dadurch gekennzeichnet, daß die mindestens eine mittlere Teillinse (14) eine gerade Scheitellinie aufweist, welche Scheitelpunkte der beiden seitlichen Teillinsen (12, 13) miteinander verbindet.

## Claims

1. Lens arrangement for focusing radar waves for ranging sensors, in particular for motor vehicles, characterized in that several component lenses (2, 3, 4; 12, 13, 14) are arranged next to one another in one piece.

2. Lens arrangement according to Claim 1, characterized in that the focal points of the component lenses (2, 3, 4; 12, 13, 14) lie in a plane parallel to the lens plane.

3. Lens arrangement according to Claim 1 or 2, characterized in that the extent of at least one middle lens (4; 14) is smaller in the longitudinal direction of the overall lens arrangement (1; 11) than in the transverse direction.

4. Lens arrangement according to one of the preceding claims, characterized in that three component lenses (2, 3, 4; 12, 13, 14) are provided.

5. Lens arrangement according to one of the preceding claims, characterized in that the component lenses (2, 3, 4) have the shape of hyperboloids.

6. Lens arrangement according to one of the preceding claims, characterized in that the axes of lateral component lenses (2, 3; 12, 13) are inclined with respect to the axis of at least one middle component lens (4; 14).

7. Lens arrangement according to one of the preceding claims, characterized in that the at least one middle component lens (14) is curved only in the transverse direction of the overall lens arrangement (11).

8. Lens arrangement according to Claim 7, characterized in that the at least one middle component lens (14) has a straight vertex line which interconnects vertices of the two lateral component lenses (12, 13).

## Revendications

1. Dispositif de lentilles pour focaliser des ondes radar de détecteurs de distance notamment applicables à des véhicules automobiles,
caractérisé en ce que
plusieurs lentilles partielles (2, 3, 4 ; 12, 13, 14) sont juxtaposées en une seule pièce.

2. Dispositif de lentilles selon la revendication 1,
caractérisé en ce que
les foyers des lentilles partielles (2, 3, 4 ; 12, 13, 14) sont situés dans un plan parallèle au plan des lentilles.

3. Dispositif de lentilles selon la revendication 1 ou 2,
caractérisé en ce que
l'extension d'au moins une lentille médiane (4, 14) dans la direction longitudinale de l'ensemble du dispositif de lentilles (1, 11), est inférieure à l'extension dans la direction transversale.

4. Dispositif de lentilles selon l'une quelconque des revendications précédentes,
caractérisé par
trois lentilles partielles (2, 3, 4 ; 12, 13, 14).

5. Dispositif de lentilles selon l'une quelconque des revendications précédentes,
caractérisé en ce que
les lentilles partielles (2, 3, 4) ont la forme d'un hyperboloïde.

6. Dispositif de lentilles selon l'une quelconque des revendications précédentes,
caractérisé en ce que
les axes des lentilles partielles latérales (2, 3 ; 12, 13) sont inclinés par rapport à l'axe d'au moins une lentille médiane (4, 14).

7. Dispositif de lentilles selon l'une quelconque des revendications précédentes,
caractérisé en ce qu'
au moins une lentille partielle médiane (4) est cintrée seulement dans la direction transversale de l'ensemble du dispositif à lentilles (11).

8. Dispositif de lentilles selon la revendication 7,
caractérisé en ce qu'
au moins une lentille partielle médiane (14) présente une ligne de sommet droite rejoignant les sommets des deux lentilles partielles latérales (12, 13).
